# FASCICULE DE BREVET EUROPEEN

(11) **EP 1 942 244 B1**
(45) Date de publication et mention de la délivrance du brevet: **06.01.2010**
(21) Numéro de dépôt: 07119340.3
(22) Date de dépôt: 25.10.2007
(51) Int. Cl.: E05C 9/04, B60J 1/16

(54) **Dispositif d'obturation d'une baie à pêne de verrouillage et de butée fin de course, et véhicule automobile correspondant.**
Vorrichtung zur Abdichtung eines Öffnungsfelds mit Hilfe eines Verschlussriegels und eines Endanschlags und entsprechendes Kraftfahrzeug
Device for blocking a bay with a hood latch bolt and limit stop, and corresponding automobile

(30) Priorité: 02.11.2006 FR 0609596
(43) Date de publication de la demande: 09.07.2008
(73) Titulaire: Wagon SAS, 79302 Bressuire Cédex (FR)
(72) Inventeur: Merlet, David, 85590 Saint Malo du Bois (FR); Leduque, Cédrick, 17100 Saintes (FR); Damet, Christophe, 03400 Yzeure (FR)
(74) Mandataire: Bioret, Ludovic

(56) Documents cités:
- EP-A- 1 688 285
- EP-A1- 0 956 987
- EP-A1- 1 022 172

## Description

### 1. Domaine de l'invention

Le domaine de l'invention est celui des baies de véhicules automobiles. Plus précisément, l'invention concerne les dispositifs d'obturation d'une baie ménagée dans la carrosserie d'un véhicule, ou dans une portière du véhicule, et comprenant une partie mobile coulissante, susceptible de libérer ou de fermer une ouverture ménagée dans ces dispositifs.

### 2. Solutions de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture des vitres de portière est de rendre celle-ci mobile verticalement dans son propre plan, en la faisant pénétrer ou sortir du caisson ou de la garniture de la portière. On connaît également des panneaux coulissants horizontalement, le long de rails formés dans un cadre.

Une autre technique a été proposée par le titulaire de la présente demande de brevet. Cette technique est notamment décrite dans les documents de brevet EP - 0 778 168 et EP - 0 857 844. Le dispositif d'obturation (appelé par la suite « baie flush ») présenté dans ces documents comprend un ensemble fixe et une partie mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle « baie flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP - 1 022 172.

Sur le plan esthétique, la « baie flush » présente, vue de l'extérieur, un aspect lisse, affleurant avec la carrosserie, du fait qu'aucun cadre n'est nécessaire.

Pour assurer un coulissement de la partie mobile, constituée généralement par un panneau transparent, on prévoit par exemple un dispositif de guidage comportant un premier et un second rails de guidage montés fixes sur l'ensemble fixe de la baie (ou structure fixe), de part et d'autre de l'ouverture fermée par le panneau mobile. Celui-ci est monté sur les rails, pour coulisser par exemple selon une direction longitudinale, dans un plan de coulissement entre une (ou plusieurs) position d'ouverture et une position intermédiaire de dégagement dans laquelle il est en regard de la baie et dégagé de celle-ci.

L'invention se rapporte plus particulièrement à ce type de dispositif d'obturation appelé « baie flush », à ses variantes et ses perfectionnements. Toutefois, l'invention peut de façon plus large s'appliquer à tous les dispositifs d'obturation dont la cinématique d'ouverture et/ou de fermeture inclut un déplacement (en y) entre une position d'ouverture et une position intermédiaire de dégagement, dans un plan parallèle au plan de l'ensemble fixe, et un déplacement (en x) dans ce plan parallèle, mais également plus généralement à tout type d'ouverture composé d'un système de fermeture comprenant au moins un pêne.

### 3. Inconvénients de l'art antérieur

Plusieurs solutions ont été proposées pour le verrouillage du panneau mobile dans la position fermée, et le cas échéant dans des positions d'ouverture choisies. De façon assez classique, on prévoit au moins un pêne coopérant avec une gâche formée dans un des éléments de support et/ou de guidage, de façon à verrouiller le panneau mobile. Deux pênes peuvent être prévus, pour verrouiller efficacement le panneau mobile en parties haute et basse.

Pour des raisons de sécurité, on doit équiper les « baies flush » d'éléments d'arrêt prévenant le coulissement de la partie mobile au-delà de la partie amont de l'ouverture qu'elle est susceptible d'obturer. De façon connue, un doigt solidaire du cadre de la partie mobile, vient en appui contre une butée fin de course prévue sur la partie fixe, par exemple au niveau des éléments de support et/ou de guidage. Cette approche permet d'éviter que la partie mobile ne quitte les éléments de support et/ou de guidage, notamment lors d'une forte décélération générée, par exemple, lors d'un freinage d'urgence ou produite au cours d'un accident, et ainsi d'assurer efficacement la sécurité des occupants d'un véhicule.

En revanche, cette approche est relativement complexe de conception, et encombrante. En particulier, elle impose un cadre de partie coulissante présentant une section relativement importante, ce qui réduit en conséquence le clair de baie, c'est-à-dire la surface vitrée de la baie.

Par ailleurs, des éléments de préhension permettent d'agir sur les pênes de façon à déverrouiller le panneau mobile. Également pour des raisons de sécurité, des dispositions normatives, notamment la norme ECE 21, imposent que les éléments de préhension rigides ne débordent pas de plus d'une certaine valeur de l'élément d'obturation. Ceci limite fortement les possibilités offertes dans la conception de tels éléments et pose notamment des problèmes liés à l'ergonomie.

### 4. Objectifs de l'invention

L'invention a notamment pour objectif de pallier ces inconvénients de l'art antérieur.

Plus précisément, un objectif de l'invention est de fournir une telle technique qui permette d'assurer un blocage, ou arrêt de sécurité, de la partie mobile d'un dispositif d'obturation de façon simple et efficace, notamment lors d'une forte décélération.

Un autre objectif de l'invention est de fournir une telle technique qui soit peu encombrante et qui contribuent à augmenter le clair de baie.

L'invention à également pour objectif de fournir une telle technique qui permette d'assurer un verrouillage efficace de la partie coulissante en position d'obturation, de libération, et également dans des positions de libération intermédiaires.

Selon certains modes de réalisation de l'invention, un autre objectif de l'invention est de fournir une telle technique qui permette de faciliter la conception des moyens de préhension permettant le déverrouillage de la partie coulissante.

L'invention à encore pour objectif de proposer une technique qui soit fiable, simple et peu coûteuse.

### 5. Exposé de l'invention

Ces objectifs, ainsi que d'autres qui apparaîtront par la suite, sont atteints à l'aide d'un dispositif d'obturation d'une baie ménagée dans la carrosserie d'un véhicule automobile, comprenant une structure fixe et au moins un panneau mobile par rapport à ladite structure fixe entre une position d'obturation et une position de libération maximum d'une ouverture ménagée dans ladite structure fixe, ledit panneau mobile portant au moins un pêne susceptible de coopérer avec au moins un élément de verrouillage complémentaire prévu à cet effet dans ladite structure fixe.

Selon l'invention, ledit pêne, ou au moins un desdits pênes, présente une surface latérale de contact coopérant avec une butée d'arrêt prévue dans ladite structure fixe, par exemple lorsque ledit panneau mobile est dans ladite position de libération maximum.

Ainsi, l'invention repose sur une approche tout à fait nouvelle et inventive consistant à mettre en oeuvre un ou plusieurs pênes qui assurent une double fonction, en permettant non seulement le verrouillage du panneau mobile en position d'obturation, en position de libération, et le cas échéant dans des positions intermédiaires, mais également une fonction d'arrêt de sécurité par exemple lorsqu'il est en appui contre une butée en fin de course, de façon que, lors d'une forte décélération, le panneau mobile ne puisse coulisser au-delà de la baie qu'il est susceptible d'obturer.

De cette façon, le panneau mobile ne peut quitter les éléments de support et/ou de guidage qui le lient à la partie fixe. La sécurité des passagers est ainsi accrue.

Cette approche permet de simplifier la conception des dispositifs d'obturation dans la mesure où, le ou les pênes assurent les fonctions de verrouillage et d'arrêt de sécurité sans qu'il ne soit nécessaire de prévoir un doigt spécifique sur le cadre du panneau mobile, comme le prévoient les techniques de l'art antérieur.

Cette approche permet en outre, puisqu'elle ne nécessite pas un cadre de panneau mobile présentant une section importante, du fait de l'absence de doigt sur le cadre, de réduire l'encombrement du cadre et donc de maximiser le clair de baie en conséquence.

Selon une caractéristique avantageuse, le dispositif selon l'invention comprend au moins un rail de guidage solidaire de ladite structure fixe, ledit ou au moins un desdits pênes étant guidée dans une portion de coulissement dudit ou desdits rails.

Le pêne selon l'invention permet donc non seulement d'assurer le verrouillage et un arrêt de sécurité du panneau mobile, mais également son guidage le long de rails solidaires de la partie fixe de façon simple et efficace.

Préférentiellement, ledit ou au moins un desdits pênes porte un élément déformable et/ou élastique destiné à venir en contact avec une desdites portions de coulissement.

La mise en oeuvre d'un tel élément déformable et/ou élastique permet notamment de limiter le bruit dû au coulissement et/ou au verrouillage du panneau mobile. Cette approche permet en outre de combler des jeux qu'il peut exister au niveau du panneau mobile, par exemple en raison d'un défaut d'alignement des rails de guidage.

Préférentiellement, ledit pêne est au moins partiellement surmoulé.

Ceci peut également contribuer à réduire l'apparition de bruit au cours de la manipulation du panneau mobile, dû au coulissement du panneau mobile et/ou au claquage du ou des pênes sur les rails au cours du verrouillage du panneau mobile.

Le dispositif selon l'invention comprend avantageusement des moyens de préhension solidarisés audit ou à chacun desdits pênes et mobiles entre au moins deux positions :
- une position de verrouillage dans laquelle le ou lesdits pênes coopèrent avec le ou lesdits éléments de verrouillage complémentaires ;
- une position de déverrouillage dans laquelle le ou lesdits pênes ne coopèrent pas avec le ou lesdits éléments de verrouillage complémentaires.

La mise en oeuvre de pênes permet d'assurer simplement et efficacement le verrouillage du panneau mobile en position haute et/ou en position haute. La mise en oeuvre de moyens de préhensions permet en outre de faciliter la manipulation du dispositif.

Selon une approche préférée de l'invention, la ou lesdites poignées comprenant un élément de structure rigide au moins partiellement recouvert d'un revêtement sensiblement souple.

La mise en oeuvre de telles poignées contribue à améliorer les qualités ergonomiques du dispositif selon l'invention.

Avantageusement, ledit élément de structure est réalisé dans un premier matériau présentant une dureté supérieure à 50 Shore A, et en ce que ledit revêtement est réalisé dans un second matériau présentant une dureté inférieure à 50 Shore A.

Cette approche permet d'augmenter la dimension de la zone de préhension des poignées. En effet, des dispositions normatives, et notamment la norme ECE 21, imposent que la partie formant les poignées, réalisé dans un matériau présentant une dureté supérieure à 50 Shore A, ne dépasse pas de plus de 25 mm du plan formé par le panneau mobile.

Le fait de surmouler la partie structurelle de la poignée par un revêtement souple présentant une dureté inférieure à 50 Shore A permet donc, dans le respect de la norme ECE 21, d'offrir plus de liberté dans la conception des poignées. Cette approche rend notamment possible d'améliorer l'ergonomie des poignées en les dotant d'une zone de préhension d'une longueur supérieure à 25 mm, par exemple en la portant à 35 mm.

Ledit revêtement est préférentiellement moulé ou surmoulé sur ledit élément de structure rigide.

La fabrication de poignée selon l'invention en deux matériaux distincts est donc facile est peu coûteuse.

Préférentiellement, ledit élément de structure rigide s'étend sensiblement perpendiculairement au plan défini par ledit panneau mobile, sur une distance inférieure ou égale à 25 mm.

Cet aspect assure notamment le respect de la norme ECE 21.

Selon une autre caractéristique avantageuse de l'invention, la ou lesdites poignées sont mobiles en coulissement selon un axe sensiblement perpendiculaire à l'axe de coulissement du panneau mobile.

Le contrôle du déplacement du ou des pênes est ainsi facile à maîtriser.

Préférentiellement, le dispositif selon l'invention comprend deux pênes répartis de part et d'autre dudit panneau mobile, et deux poignées associée chacune à un desdits deux pênes.

Cette approche permet d'assurer efficacement et simplement le verrouillage du panneau mobile tant en partie haute qu'en partie basse.

La mise en oeuvre de deux poignées renforce les qualités ergonomiques du dispositif. Ses qualités ergonomiques sont particulièrement accrues lorsque les deux poignée sont placées l'une au regard de l'autre, de façon qu'un utilisateur puisse les pincer entre deux doigts.

L'invention porte également sur un véhicule automobile comprenant au moins un dispositif d'obturation selon l'invention.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une représentation d'un exemple de mode de réalisation d'un dispositif d'obturation d'une baie selon l'invention ;
- la figure 2 illustre une vue en éclatée du dispositif illustré à la figure 1 ;
- les figures 3a et 3b illustrent un exemple d'un pênes mis en oeuvre dans le dispositif selon l'invention ;
- les figures 4 et 6 illustrent une technique selon l'art antérieur mettant en oeuvre un doigt d'arrêt au niveau du cadre du panneau coulissant ;
- la figure 5 illustrent la technique selon l'invention dans laquelle le cadre du panneau coulissant ne comprend pas de doigt d' arrêt ;
- la figure 7 est une coupe partielle d'une poignée de déverrouillage mise en oeuvre dans le dispositif selon un mode de réalisation de l'invention.

### 7. Description d'un mode de réalisation de l'invention

### 7.1. Principe de l'invention

Le principe général de l'invention repose sur la mise en oeuvre d'un ou de plusieurs pênes à double fonction, permettant d'assurer le verrouillage du panneau coulissant en position d'obturation, en position de libération, et en positions intermédiaires, lorsqu'ils coopèrent avec des éléments de verrouillage complémentaires prévus sur la partie fixe, et permettant en outre d'assurer une fonction d'arrêt de sécurité du panneau mobile notamment en fin de course. Ainsi, lorsqu'ils viennent en butée contre un élément d'arrêt, ou de fin de course, prévu à cet effet et solidaire de la partie fixe, les pênes assurent un blocage en coulissement du panneau mobile et préviennent son coulissement au-delà de la baie à obturer y compris lorsque le véhicule subit une forte décélération.

Cette approche permet notamment d'éviter que le panneau mobile ne quitte les rails de support et/ou de guidage qui le lient à la partie fixe, par exemple au cours d'une forte décélération occasionnée lors d'un freinage d'urgence ou d'un choc, afin d'assurer la sécurité des occupants du véhicule.

### 7.2. Exemple d'architecture d'un dispositif d'obturation selon l'invention

### 7.2.1. Structure générale

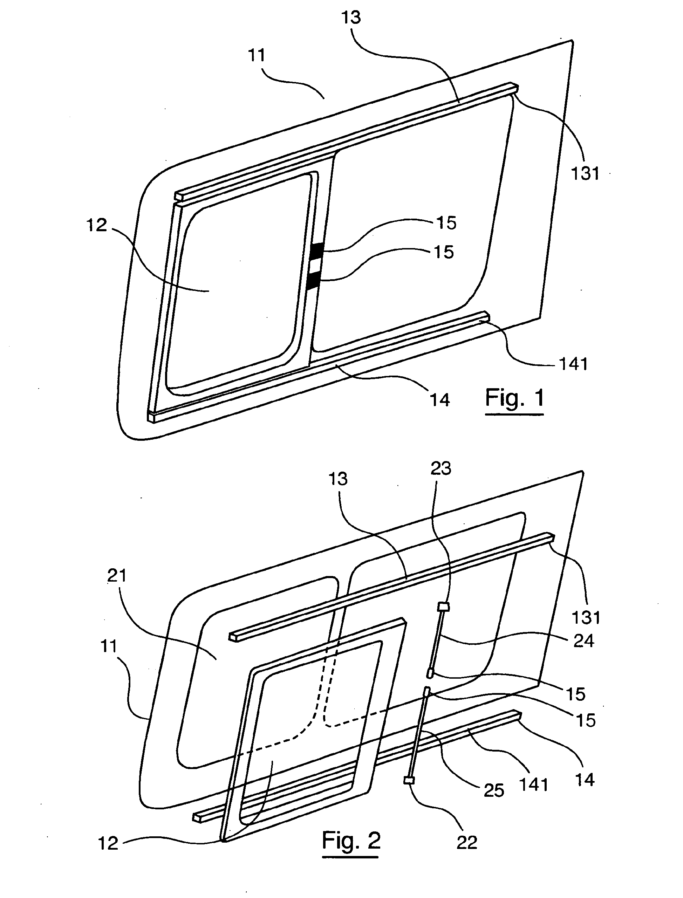

La figure 1 illustre un exemple de mode de réalisation d'un dispositif d'obturation d'une baie ménagée dans la carrosserie d'un véhicule selon l'invention.

Un tel dispositif d'obturation comprend un ensemble fixe 11 sur lequel est monté un panneau mobile 12, susceptible de coulisser le long de rails 13 et 14 montés en partie supérieure et en partie inférieure de l'ensemble fixe 11. Ces rails 13, 14 sont rapportés sur la face tournée vers l'intérieur du véhicule de l'ensemble fixe 11. Les rails de guidage 13, 14 présentent une zone de guidage 131, 141 dont la fonction sera détaillée par la suite.

Le panneau mobile 12, illustré sur la figure 1, est dans une position d'obturation dans laquelle il obture totalement une ouverture 21 ménagée dans l'ensemble fixe 11. Cette ouverture 21 apparaît plus clairement sur la figure 2.

Deux poignées de déverrouillage 15, solidaires du panneau mobile 12, permettent d'assurer son déverrouillage et son coulissement le long des rails de guidage 13, 14.

La figure 2 illustre une vue éclatée du dispositif d'obturation représenté à la figure 1.

Deux pênes 22, 23 sont répartis de part et d'autre du panneau mobile 12. Ces pênes 22, 23 peuvent prendre deux positions :
- une position verrouillée dans laquelle ils coopèrent avec des éléments de verrouillage complémentaires formés les rails de guidage 13, 14 afin de maintenir le panneau mobile 12 dans la position d'obturation, ou dans une position d'obturation intermédiaire prédéterminée, et d'empêcher son coulissement ;
- une position déverrouillée dans laquelle ils ne coopèrent pas avec les éléments de verrouillage complémentaires de façon à permettre le coulissement du panneau mobile 12.

Les éléments de verrouillage complémentaires peuvent par exemple être des gâches (non représentées) formées dans les rails de guidage 13, 14. On peut prévoir de réaliser plusieurs gâches réparties dans chacun des rails 13, 14 de façon à correspondre à des positions d'obturations intermédiaires.

Dans ce mode de réalisation particulier, les gâches formées dans les rails 13, 14 constituent également des moyens d'arrêt de sécurité du panneau coulissant 12. Ainsi, lorsque les pênes 22, 23 sont en position verrouillée, et que le véhicule subit une forte décélération, le panneau coulissant 12 est bloqué en coulissement et maintenu efficacement en position de façon à accroître la sécurité des passagers.

Chacun des pênes 22, 23 est relié à une poignée 15 par l'intermédiaire de moyens de liaison. Ces moyens de liaison peuvent par exemple être des tringles 24, 25 présentant chacune une extrémité reliée à un des pênes 22, 23 et une autre extrémité reliée à une poignée 15.

Les poignées 15 sont mobiles en coulissement selon un axe sensiblement perpendiculaire à l'axe de coulissement du panneau mobile 12. Les poignées 15 sont en outre placées en regard l'une de l'autre de façon que, pour déverrouiller le panneau mobile 12, un utilisateur puisse pincer les deux poignées 15 entre deux doigts. Cette approche offre à un utilisateur une grande facilité d'utilisation et confère au dispositif des qualités ergonomiques notables.

Des moyens de rappel tendent à ramener les pênes dans leur position verrouillée. Ces moyens de rappel peuvent agir indifféremment sur les pênes 22, 23, sur les tringles 24, 25 et/ou sur les poignées 15. Il peut notamment s'agir de ressorts de compression qui se compriment lorsque les pênes 22, 23 passent de leur position verrouillée à leur position déverrouillée.

### 7.2.2. Fonctions des pênes

### A/ Verrouillage - Déverrouillage

Les pênes 22, 23 assurent une fonction de verrouillage du panneau mobile 12.

Comme il a été expliqué, les pênes 22, 23 sont mobiles entre une position déverrouillée et une position verrouillée dans laquelle ils sont ramenés sous l'effet de moyens de rappel, de façon à coopérer avec des éléments de verrouillage complémentaires solidaires de la partie fixe 11 et à verrouiller le panneau coulissant 12.

Afin de faire coulisser le panneau mobile 12, un utilisateur peut agir simultanément sur les poignées 15 en exerçant un effort tendant à les rapprocher l'une de l'autre. Les pênes 22, 23, tirés par les tringles 24, 25, quittent les gâches formées dans les rails 13, 14. Le panneau mobile 12 est alors déverrouillé et peut coulisser librement le long des rails 13, 14 sous l'effet d'un effort appliqué par un utilisateur selon un axe sensiblement parallèle à l'axe de coulissement du panneau mobile 12, et dans un sens ou dans l'autre suivant qu'il souhaite libérer ou obturer la baie 21.

Un utilisateur peut faire coulisser le panneau mobile 12 jusqu'à la position d'obturation, la position de libération, ou jusqu'à une des positions de libération intermédiaires. Une fois le panneau mobile 12 placé dans la position désirée, l'utilisateur peut relâcher les poignées 15 de façon que les pênes 22, 23 retournent dans leur position verrouillée, sous l'effet des moyens de rappel, et verrouillent le panneau mobile 12 afin qu'il soit bloqué en translation.

### B/ Guidage en coulissement

Tel qu'il a été énoncé précédemment, les pênes 22, 23 peuvent assurer une fonction de verrouillage du panneau mobile 12.

Les pênes 22, 23 peuvent en outre assurer une troisième fonction de guidage du panneau mobile 12. À cet effet, lorsqu'ils occupent leur position déverrouillée, les pênes 22, 23 coopèrent avec les zones de guidage 131, 141 ménagées dans les rails de guidage 13, 14.

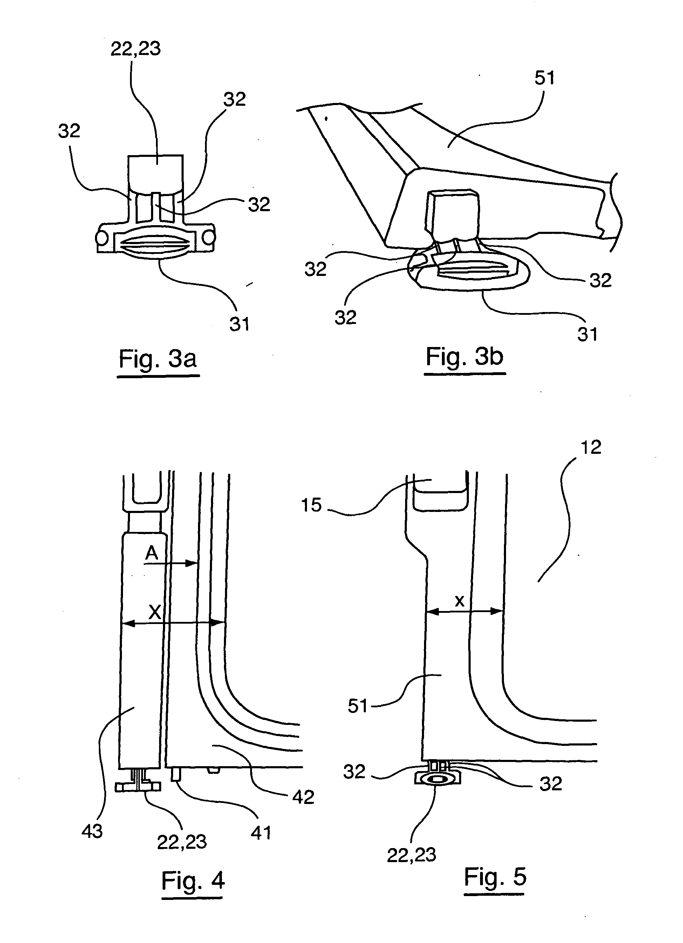

Les pênes 22, 23 peuvent donc être assimilés à des patins de guidage. Ainsi, tel que cela apparaît sur les figures 3a et 3b, les pênes 22, 23 présentent une forme sensiblement en « T » avec une zone de frottement 31 susceptible de venir au contact des zones de guidage 131, 141 des rails 13, 14. De façon avantageuse, la zone de frottement 31 est sensiblement déformable et élastique de façon à compenser les jeux éventuels et les défauts de parallélisme pouvant exister au niveau des rails 13, 14, et ainsi assurer une certaine souplesse de coulissement.

La mise en oeuvre d'une telle zone de frottement 31 élastique permet en outre d'éviter, ou à tout le moins de limiter, l'apparition de bruit lors du coulissement du panneau mobile 12. Il est aussi possible de surmouler complètement la zone située entre la zone de frottement 31 et des nervures 32 (dont la fonction sera détaillée ultérieurement) avec une autre matière de type déformable appartenant pax exemple à la famille des élastomères. Cette opération permet de faire varier l'intensité sonore (bruit de claquage du pêne sur le rail) lors du verrouillage du système, ceci en fonction de la dureté du surmoulage. En effet, suivant la géométrie des pièces environnantes (ex : carrosserie, garniture, etc.), il peut se créer un effet d'amplification du son lors de la manipulation de la baie. Ce surmoulage permet de palier à ce problème.

### C/ Arrêt de sécurité

Selon l'invention, les pênes 22, 23 assurent en outre une fonction d'arrêt de sécurité permettant d'éviter que le panneau mobile 12 ne coulisse au-delà de la baie à obturer 21 sous l'effet d'une forte décélération, et ne quitte les rails de guidage 13, 14.

À cet effet, lorsque le panneau coulissant est dans la position d'obturation, chaque pêne 22, 23 coopère avec un des moyens d'arrêt prévus dans les rails 13, 14.

Dans ce mode de réalisation particulier, les gâches ménagées dans les rails 13, 14 constituent les moyens d'arrêt. Ainsi, lorsque le panneau mobile 12 est verrouillé en position d'obturation, les pênes 22, 23 coopèrent chacun avec une gâche des rails 13, 14. Ainsi, en cas de forte décélération, le panneau mobile 12 ne coulisse pas au-delà de la baie 21 ni ne quitte les rails 13, 14, mais reste immobilisé en position.

De la même façon, le panneau mobile 12 reste immobilisé en position au cours d'une forte décélération, quelle que soit la position dans laquelle il est verrouillé (position d'obturation, position de libération, position intermédiaire).

Dans un autre mode de réalisation, le ou les pênes 22, 23 peuvent présenter une surface latérale de contact coopérant avec une butée d'arrêt prévue dans ladite structure fixe 11, par exemple au niveau des rails de guidage 13, 14, lorsque ledit panneau mobile 12 est dans ladite position de libération maximum. Dans ce cas, l'arrêt de sécurité du panneau mobile 12 ne se fait que lorsque que la baie 21 est totalement libérée.

Pour cela, les pênes 22, 23 présentent une structure particulière étudiée de façon à résister aux efforts engendrés par le panneau mobile 12 lors d'une forte décélération. La section et l'épaisseur des pênes ont été calculées en conséquence. De même, les pênes présentent un certain nombre de nervures 32 réparties de façon à en renforcer la robustesse.

La structure particulière des pênes 22, 23 et la robustesse qu'elle leur confère permet d'éviter la mise en oeuvre de doigt d'arrêt 41 sur le cadre 42 du panneau mobile, comme le proposent les techniques de l'art antérieure telle que celle qui est illustrée à la figure 4.

Cette approche nouvelle et inventive permet de réduire l'encombrement du cadre du panneau mobile du fait que, de par l'absence de doigt d'arrêt sur le cadre, le système de verrouillage du panneau coulissant, schématiquement représenté par l'élément 43 sur la figure 4, peut être décalé selon la flèche A.

L'invention permet donc la mise en oeuvre d'un cadre 51 de panneau mobile 12 dont la section est sensiblement plus faible que ceux qui sont mis en oeuvre dans les techniques de l'art antérieur.

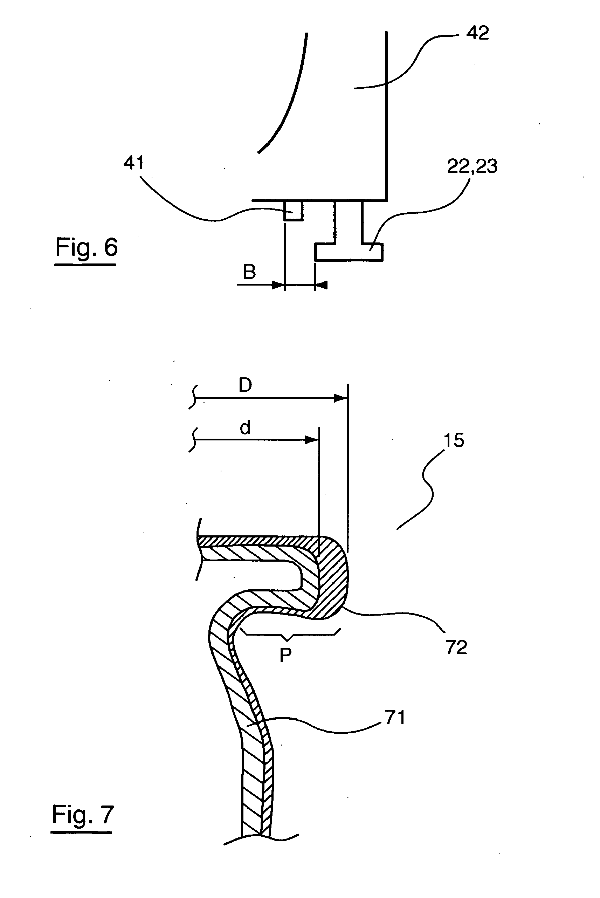

Ceci apparaît plus clairement en comparant les figures 4 et 5 qui illustrent respectivement un dispositif d'obturation de l'art antérieur et un dispositif d'obturation selon l'invention. La technique selon l'invention permet de faire passer la largeur du cadre du panneau coulissant d'une valeur « X », selon l'art antérieur, à une valeur « x » plus faible, selon l'invention, dont la différence (X-x) est de l'ordre de 14,5 mm. Par ailleurs, comme cela la apparaît sur la figure 6, le seul fait de supprimer le doigt 42 sur le cadre du panneau mobile permet de réduire la largeur du cadre à une longueur B d'environ 12,7 mm (cf. figure 6).

Ceci permet de réduire l'encombrement général du cadre et d'augmenter en conséquence le clair de baie, c'est-à-dire la surface non obturée de la baie 21 lorsque le panneau mobile 12 est dans la position de libération.

L'approche selon l'invention permet également de simplifier la conception des dispositifs d'obturation du fait qu'elle limite le nombre d'élément qui le constitue, ou tout le moins en ce qu'elle limite ne nombre d'opérations nécessaires à leur fabrication.

### 7.2.3. Les poignées

La figure 7 illustre une vue partielle en coupe d'une poignée 15 mise en oeuvre dans un dispositif d'obturation selon l'invention.

Cette poignée 15 comprend un élément de structure 71 réalisé dans un matériau rigide. Cet élément de structure 71 constitue un insert qui assure à lui seul la tenue et la rigidité de la poignée 15. Il est préférentiellement réalisé dans un matériau plastique présentant une dureté supérieure ou égale à 50 Shore A.

L'élément de structure 71 est recouvert d'un revêtement 72. Le revêtement 72 est préférentiellement réalisé dans un matériau plastique présentant une dureté inférieure à 50 Shore A. Il pourra avantageusement s'agir d'élastomère.

Préférentiellement, le revêtement 72 sera obtenu par moulage ou surmoulage de l'insert.

La mise en oeuvre d'une telle structure de poignée permet d'élargir considérablement les possibilités offertes dans leur conception. En effet, certaines dispositions normatives, notamment la norme ECE 21, imposent que les moyens de préhension d'une dureté supérieure à 50 Shore A, qui permettent le déverrouillage du panneau mobile, ne débordent pas de plus d'une certaine dimension « d », dont la valeur est en l'occurrence fixée à 25 mm, de la surface de la vitre supportée par le cadre du panneau coulissant. La mise en oeuvre d'un revêtement d'une dureté inférieure à 50 Shore A sur l'insert d'une dureté supérieure à 50 Shore A permet donc d'augmenter la longueur totale de débordement des moyens de préhension en la faisant passer à une dimension « D » plus importante par exemple de 10 mm environ, et d'augmenter en conséquence la taille de la zone de préhension « P » au niveau de laquelle peut agir un utilisateur.

Cette approche permet donc, dans le respect des dispositions normatives, d'assurer une meilleure préhension, de faciliter la manipulation et donc d'augmenter les qualités ergonomiques des poignées mises en oeuvre pour manipuler le panneau coulissant d'un dispositif d'obturation selon l'invention.

## Revendications

1. Dispositif d'obturation d'une baie ménagée dans la carrosserie d'un véhicule automobile, comprenant une structure fixe (11) et au moins un panneau mobile (12) par rapport à ladite structure fixe (11) entre une position d'obturation et une position de libération maximum d'une ouverture (21) ménagée dans ladite structure fixe (11), ledit panneau mobile (12) portant au moins un pêne (22, 23) susceptible de coopérer avec au moins un élément de verrouillage complémentaire prévu à cet effet dans ladite structure fixe (11),
**caractérisé en ce que** ledit pêne (22, 23), ou au moins un desdits pênes (22, 23), présente une surface latérale de contact coopérant avec une butée d'arrêt prévue dans ladite structure fixe (11).

2. Dispositif d'obturation selon la revendication 1, **caractérisé en ce qu'**il comprend au moins un rail de guidage (13, 14) solidaire de ladite structure fixe (11), et **en ce que** ledit ou au moins un desdits pênes (22, 23) est guidée dans une portion de coulissement (131, 141) dudit ou desdits rails (13, 14).

3. Dispositif d'obturation selon la revendication 2, **caractérisé en ce que** ledit ou au moins un desdits pênes (22, 23) porte un élément déformable et/ou élastique (31) destiné à venir en contact avec une desdites portions de coulissement (131, 141).

4. Dispositif d'obturation selon l'une quelconque des revendications 1 à 3, **caractérisé en ce que** ledit ou au moins un desdits pênes (22, 23) est au moins partiellement surmoulé d'un matériau sensiblement souple.

5. Dispositif d'obturation selon l'une quelconques des revendications 1 à 4, **caractérisé en ce qu'**il comprend des moyens de préhension solidarisés audit ou à chacun desdits pênes (22, 23) et mobiles entre au moins deux positions :
- une position de verrouillage dans laquelle le ou lesdits pênes (22, 23) coopèrent avec le ou lesdits éléments de verrouillage complémentaires ;
- une position de déverrouillage dans laquelle le ou lesdits pênes (22, 23) ne coopèrent pas avec le ou lesdits éléments de verrouillage complémentaires.

6. Dispositif d'obturation selon la revendication 5, **caractérisé en ce que** lesdits moyens de préhension comprennent au moins une poignée (15) associée audit ou à au moins un desdits pênes (22, 23), la ou lesdites poignées (15) comprenant un élément de structure rigide (71) au moins partiellement recouvert d'un revêtement sensiblement souple (72).

7. Dispositif d'obturation selon la revendication 6, **caractérisé en ce que** ledit élément de structure (71) est réalisé dans un premier matériau présentant une dureté supérieure à 50 Shore A, et **en ce que** ledit revêtement (72) est réalisé dans un second matériau présentant une dureté inférieure à 50 Shore A.

8. Dispositif d'obturation selon l'une quelconque des revendications 6 et 7, **caractérisé en ce que** ledit revêtement (72) est moulé ou surmoulé sur ledit élément de structure rigide (71).

9. Dispositif d'obturation selon l'une quelconque des revendications 6 à 8, **caractérisé en ce que** ledit élément de structure rigide (71) s'étend sensiblement perpendiculairement au plan défini par ledit panneau mobile (12), sur une distance inférieure ou égale à 25 mm.

10. Dispositif d'obturation selon l'une quelconque des revendications 6 à 9, **caractérisé en ce que** la ou lesdites poignées (15) sont mobiles en coulissement selon un axe sensiblement perpendiculaire à l'axe de coulissement du panneau mobile (12).

11. Dispositif selon l'une quelconque des revendications 6 à 10, **caractérisé en ce qu'**il comprend deux pênes (22, 23) répartis de part et d'autre dudit panneau mobile (12), et deux poignées (15) associée chacune à un desdits deux pênes (22, 23).

12. Véhicule automobile, **caractérisé en ce qu'**il comprend au moins un dispositif d'obturation selon l'une quelconque des revendications 1 à 11.

## Claims

1. Blocking device for blocking an aperture which is provided in the body of a motor vehicle, comprising a fixed structure (11) and at least one panel (12) which is movable relative to the fixed structure (11) between a blocking position and a position for maximum release of an opening (21) which is provided in the fixed structure (11), the movable panel (12) carrying at least one sliding bolt (22, 23) which is capable of co-operating with at least one complementary locking element which is provided for this purpose in the fixed structure (11),
**characterised in that** the sliding bolt (22, 23), or at least one of the sliding bolts (22, 23), has a lateral contact surface which co-operates with a limit stop which is provided in the fixed structure (11).

2. Blocking device according to claim 1, **characterised in that** it comprises at least one guiding rail (13, 14) which is fixedly joined to the fixed structure (11), and **in that** the or at least one of the sliding bolt (22, 23) is guided in a sliding portion (131, 141) of the rail(s) (13, 14).

3. Blocking device according to claim 2, **characterised in that** the or at least one of the sliding bolt (22, 23) carries a deformable and/or resilient element (31) which is intended to come into contact with one of the sliding portions (131, 141).

4. Blocking device according to any one of claims 1 to 3, **characterised in that** the or at least one of the sliding bolts (22, 23) is at least partially overmoulded by a substantially flexible material.

5. Blocking device according to any one of claims 1 to 4, **characterised in that** it comprises gripping means which are fixedly joined to the or to each of the sliding bolt (22, 23) and which can be moved between at least two positions:
- a locking position in which the sliding bolt (22, 23) co-operates with the complementary locking element;
- an unlocking position in which the sliding bolt (22, 23) does not co-operate with the complementary locking element.

6. Blocking device according to claim 5, **characterised in that** the gripping means comprise at least one handle (15) which is associated with the or at least one of the sliding bolt (22, 23), the handle(s) (15) comprising a rigid structural element (71) which is at least partially covered with a substantially flexible coating (72).

7. Blocking device according to claim 6, **characterised in that** the structural element (71) is produced from a first material having a hardness greater than 50 Shore A, and **in that** the coating (72) is produced from a second material having a hardness less than 50 Shore A.

8. Blocking device according to either claim 6 or claim 7,
**characterised in that** the coating (72) is moulded or overmoulded on the rigid structural element (71).

9. Blocking device according to any one of claims 6 to 8,
**characterised in that** the rigid structural element (71) extends substantially perpendicularly relative to the plane defined by the movable panel (12) over a distance less than or equal to 25 mm.

10. Blocking device according to any one of claims 6 to 9,
**characterised in that** the handle(s) (15) can be moved in a sliding manner along an axis which is substantially perpendicular relative to the sliding axis of the movable panel (12).

11. Device according to any one of claims 6 to 10,
**characterised in that** it comprises two sliding bolts (22, 23) which are distributed at one side and the other of the movable panel (12), and two handles (15) which are each associated with one of the two sliding bolts (22, 23).

12. Motor vehicle, **characterised in that** it comprises at least one blocking device according to any one of claims 1 to 11.

## Patentansprüche

1. Vorrichtung zur Abdichtung eines in der Karosserie eines Kraftfahrzeugs angeordneten Öffnungsfeldes, mit einer festen Struktur (11) und zumindest einer gegenüber der festen Struktur (11) zwischen einer Abdichtungsstellung und einer Stellung zur maximalen Freigabe einer in der festen Struktur (11) angeordneten Öffnung (21) beweglichen Blende (12), wobei die bewegliche Blende (12) zumindest einen Verschlussriegel (22, 23) aufweist, der dazu ausgebildet ist, mit zumindest einem für diesen Effekt in der festen Struktur (11) vorgesehenen komplementären Verriegelungselement zusammenzuwirken,
**dadurch gekennzeichnet, dass** der Verschlussriegel (22, 23) oder zumindest einer der Verschlussriegel (22, 23) eine mit einem in der festen Struktur (11) vorgesehenen Endanschlag zusammenwirkende seitliche Berührungsfläche aufweist.

2. Vorrichtung zur Abdichtung nach Anspruch 1,
**dadurch gekennzeichnet, dass** sie zumindest eine an die feste Struktur (11) angrenzende Führungsschiene (13, 14) umfasst, und dass der oder zumindest einer der Verschlussriegel (22, 23) in einem Gleitführungsteil (131, 141) der einen oder der mehreren Schienen (13, 14) geführt ist.

3. Vorrichtung zur Abdichtung nach Anspruch 2,
**dadurch gekennzeichnet, dass** der oder zumindest einer der Verschlussriegel (22, 23) ein deformierbares und/oder elastisches Element (31) aufweist, welches dazu bestimmt ist, mit einem der Gleitführungsteile (131, 141) in Kontakt zu kommen.

4. Vorrichtung zur Abdichtung nach einem der Ansprüche 1 bis 3,
**dadurch gekennzeichnet, dass** der oder zumindest einer der Verschlussriegel (22, 23) zumindest zum Teil mit einem merklich nachgiebigem Material umformt ist.

5. Vorrichtung zur Abdichtung nach einem der Ansprüche 1 bis 4,
**dadurch gekennzeichnet, dass** sie Mittel zum Greifen umfasst, welche am oder an jedem der Verschlussriegel (22, 23) ausgebildet sind und beweglich zwischen zumindest zwei Stellungen sind:
- einer Verriegelungsstellung, in welcher der oder die Verschlussriegel (22, 23) mit dem oder den komplementären Verschlusselementen zusammenwirken;
- einer Entriegelungsstellung, in welcher der oder die Verschlussriegel (22, 23) nicht mit dem oder den komplementären Verriegelungselementen zusammenwirken.

6. Vorrichtung zur Abdichtung nach Anspruch 5,
**dadurch gekennzeichnet, dass** die Mittel zum Greifen zumindest einen dem oder zumindest einem der Verschlussriegel (22, 23) zugeordneten Griff (15) umfasst, wobei der oder die Griffe (15) ein zumindest zum Teil von einer merklich nachgiebigen Mantelung (72) bedecktes Element starre Struktur (71) umfassen.

7. Vorrichtung zur Abdichtung nach Anspruch 6,
**dadurch gekennzeichnet, dass** das Strukturelement (71) in einem ersten, eine Härte über 50 Shore A aufweisenden Material ausgeführt ist, und dass die Mantelung (72) in einem zweiten, eine Härte unter 50 Shore A aufweisenden Material ausgeführt ist.

8. Vorrichtung zur Abdichtung nach einem der Ansprüche 6 und 7,
**dadurch gekennzeichnet, dass** die Mantelung (72) auf das Element starre Struktur (71) geformt oder aufgeformt ist.

9. Vorrichtung zur Abdichtung nach einem der Ansprüche 6 bis 8,
**dadurch gekennzeichnet, dass** sich das Element starre Struktur (71) über eine Strecke kleiner oder gleich 25 mm im Wesentlichen senkrecht zu einer von der beweglichen Blende (12) definierten Ebene erstreckt.

10. Vorrichtung zur Abdichtung nach einem der Ansprüche 6 bis 9,
**dadurch gekennzeichnet, dass** der oder die Griffe (15) durch Gleiten längs einer zu der Gleitführungsachse der beweglichen Blende (12) im Wesentlichen senkrechten Achse beweglich sind.

11. Vorrichtung zur Abdichtung nach einem der Ansprüche 6 bis 10,
**dadurch gekennzeichnet, dass** sie zwei beidseitig der beweglichen Blende (12) angeordnete Verschlussriegel (22, 23) und zwei jeweils einem der zwei Verschlussriegel zugeordnete Griffe (15) umfasst.

12. Kraftfahrzeug,
**dadurch gekennzeichnet, dass** es zumindest eine Vorrichtung zur Abdichtung nach einem der Ansprüche 1 bis 11 umfasst.
